# EUROPÄISCHE PATENTANMELDUNG

(11) **EP 4 723 293 A2**
(43) Veröffentlichungstag der Anmeldung: **08.04.2026**
(21) Anmeldenummer: 25216437.1
(22) Anmeldetag: 02.02.2018
(51) Int. Cl.: H01M 10/26

(54) **HOCHREAKTIVES, STAUBFREIES UND FREIFLIESSENDES LITHIUMSULFID UND VERFAHREN ZU DESSEN HERSTELLUNG**

(30) Priorität: 03.02.2017 DE 102017201772
(62) Teilanmeldung aus: 18704197.5
(71) Anmelder: Albemarle Germany GmbH, 60549 Frankfurt am Main (DE)
(72) Erfinder: Vitze, Hannes, 65510 Idstein (DE); Nickel, Vera, 35708 Haiger (DE); Lang, Sebastian, 38644 Goslar (DE); Müller, Marc-Christian, 55437 Ober-Hilbersheim (DE); Pietzner, Sebastian, 65779 Kelkheim (DE); Plath, Armine, 60311 Frankfurt am Main (DE)
(74) Vertreter: Uexküll & Stolberg

(57) **Zusammenfassung**

Die Erfindung betrifft ein hochreaktives, hochreines, freifließendes und staubfreies Lithiumsulfidpulver, welches eine mittlere Partikelgröße zwischen 250 und 1500 µm und BET-Oberflächen zwischen 1 und 100 m²/g aufweist. Die Erfindung betrifft weiterhin ein Verfahren zu dessen Herstellung, wobei in einer ersten Stufe Lithiumhydroxidmonohydrat in einem temperierbaren Aggregat auf eine Reaktionstemperatur zwischen 150°C und 450°C unter Luftausschluss erhitzt und mit einem Inertgas über- oder durchströmt wird bis der Restkristallwassergehalt des gebildeten Lithiumhydroxids kleiner 5 Gew.% beträgt und in einer zweiten Stufe das in der ersten Stufe gebildete wasserfreie Lithiumhydroxid mit einer gasförmigen Schwefelquelle aus der Gruppe Schwefelwasserstoff, elementarer Schwefel, Kohlenstoffdisulfid, Mercaptane oder Schwefelnitride gemischt, über- oder durchströmt wird.

## Beschreibung

Die Erfindung betrifft ein hochreaktives, hochreines, freifließendes und staubfreies Lithiumsulfidpulver und dessen Herstellung.

Lithiumsulfid wird gegenwärtig als Rohstoff für sulfidische Festelektrolyte verwendet. Solche Festelektrolyte sollen zukünftig Flüssigelektrolyte in lithium-basierten Batteriesystemen ersetzen. Hierdurch soll die Sicherheit der Batteriesysteme verbessert werden. Die gegenwärtig verwendeten flüssigen oder polymeren Elektrolyte verwenden LiPF₆ als Leitsalz, welches sich oberhalb von 70°C zersetzt und so Nebenreaktionen mit anderen Zellbestandteilen auslöst. Diese zumeist exotherm verlaufenden Reaktionen können zur Selbsterhitzung und schließlich zur völligen Zerstörung der elektrochemischen Zelle unter Entzündung der verwendeten organischen Lösemittel führen.

Lithiumsulfid kann weiterhin als Aktivmaterial in Lithium-Schwefel-Zellen verwendet werden. Hierzu wird ein entladener Aufbau verwendet, bei dem als Anode ein lithiumfreies Material wie beispielsweise konventioneller Graphit und als Kathode Lithiumsulfid verwendet wird (B. Scrosati, Angew. Chem. 2010, 122, 2421-4).

Um eine optimale Raum-Zeit-Ausbeute in den Herstellverfahren der oben beschriebenen sulfidischen Festelektrolyte wie zum Beispiel Li₆PS₅X (X=Cl, Br, I) zu ermöglichen, muss die Reaktivität der einzelnen Rohstoffe erhöht werden (WO2009047254). Dies kann durch Oberflächenvergrößerung mittels Vermahlung erzielt werden oder durch teure Spezialverfahren zur Herstellung des Lithiumsulfids (Y.K. Sun, J. Power Sources, 2016, 323, 174-188). Vermahlenes Lithiumsulfid ist allerdings schlecht handhabbar, weil das Pulver nicht mehr fließfähig ist. Die Dosierung eines solchen Pulvers ist aufwendig und mit einem erhöhten Gefahrenpotential verbunden.

Neben der gewünschten erhöhten Reaktivität, gekoppelt mit der einfachen Handhabung eines solches Produktes, sollte das Lithiumsulfid hochrein sein, d.h. möglichst keine Fremdelemente oder andere Verunreinigungen enthalten. Besonderes Augenmerk wird hierbei auf die polysulfidischen und sulfoxidischen Verunreinigungen gelegt, da diese zu verringerter Zyklenstabilität der galvanischen Zellen führen. Auch redoxaktive Spezies, wie beispielsweise Übergangsmetallkationen sind aus dem gleichen Grund zu vermeiden.

Die Erfindung hat sich die Aufgabe gestellt, ein freifließendes und dennoch hochreaktives Lithiumsulfid anzugeben, sowie ein Verfahren zu dessen einfacher und kostengünstiger Herstellung.

Die Aufgabe wird durch ein poröses Lithiumsulfid gelöst, welches aufgrund seiner Partikelgröße und deren enger Verteilungsfunktion freifließend und staubfrei ist, wobei es eine mittlere Partikelgröße zwischen 250 und 1500 µm und BET-Oberflächen zwischen 1 und 100 m²/g aufweist. Es ist weiterhin dadurch gekennzeichnet, dass es bei einer Umsetzung zu sulfidischen Festelektrolyten der Umsatz mindestens 90 Gew.% beträgt und dass kationische Verunreinigungen aus der Gruppe der Alkali-, Erdalkali- und Übergangsmetallkationen im Bereich von 0,01 - 100 ppm und anionische Verunreinigungen aus der Gruppe der Oxoanionen des Kohlenstoffs und des Schwefels sowie Halogenide Konzentrationen von 1 - 1000 ppm enthalten sind.

Die mittlere Partikelgröße wird gemäß dieser Erfindung gemessen als Volumenverteilungsfunktion, die über Laserbeugungspartikelanalyse von Suspensionen des entsprechenden Feststoffes in einem inerten Medium ermittelt wird.

Vorteilhafterweise ist das erfindungsgemäße Lithiumsulfid eines, bei dem Übergangsmetallkationen von Eisen, Nickel und/oder Chrom in einem Konzentrationsbereich von 0,01 - 10 ppm sowie Carbonat-, Sulfat-, Sulfit-, Thiosulfat-, Chlorid-, Bromid- und/oder lodid-Anionen in einem Konzentrationsbereich von 1 - 1000 ppm enthalten sind.

Das erfindungsgemäße Lithiumsulfid ist weiterhin charakterisiert dadurch, dass es freifließend ist, wobei bei einer Beladung eines Metalltrichters mit einem Trichterkörperdurchmesser von 45 mm, einem Trichterhalsdurchmesser von 5 mm, einer Trichterhalslänge von 3 mm und einem Öffnungswinkel von 55° mit 3,5 g des Lithiumsulfidpulvers, das Lithiumsulfidpulver bis auf eine Restmenge von maximal 0,0005 g bei Öffnung des Auslaufs aus dem Metalltrichter austritt.

Das erfindungsgemäße Verfahren besteht darin, dass in einer ersten Stufe Lithiumhydroxidmonohydrat mit einer mittleren Partikelgröße im Bereich von 150 - 2000 µm in einem temperierbaren Aggregat auf eine Reaktionstemperatur zwischen 150°C und 450°C unter Luftausschluss erhitzt und mit einem Inertgas über- oder durchströmt wird bis der Restkristallwassergehalt des gebildeten Lithiumhydroxids kleiner 5 Gew.% beträgt und in einer zweiten Stufe das in der ersten Stufe gebildete wasserfreie Lithiumhydroxid mit einer Schwefelquelle aus der Gruppe Schwefelwasserstoff, elementarer Schwefel, Kohlenstoffdisulfid, Mercaptane oder Schwefelnitride gemischt, über- oder durchströmt wird.

Unter Luftausschluss wird dabei ein Restgehalt von Sauerstoff, CO₂, CO und/oder COS kleiner als 300 ppm im Trägergasstrom angesehen.

Durch dieses Verfahren wird ein Produkt hergestellt, in welchem die morphologischen Eigenschaften durch die Herstellung des Zwischenproduktes Lithiumhydroxid eingestellt werden und bei der weiteren Umwandlung zum Lithiumsulfid erhalten bleiben. Dieses Verfahren garantiert durch seine Durchführung weiterhin eine sehr hohe Reinheit des erhaltenen Lithiumsulfids.

Das erfindungsgemäße Produkt wird bevorzugt durch einen zweistufigen Eintopfprozess hergestellt. In einem ersten Verfahrensschritt wird das Kristallwasser ausgetrieben, wobei ein hochreaktives, aber dennoch freifließendes Lithiumhydroxidpulver erzeugt wird, welches in einem zweiten Verfahrensschritt mit einer Schwefelquelle zu hochreaktivem und freifließendem Lithiumsulfid umgesetzt wird.

Die Bezeichnung hohe Reinheit wird hier folgendermaßen definiert: Kationische Verunreinigungen aus der Gruppe der Alkali-, Erdalkali- und Übergangsmetallkationen liegen im Bereich von 0,01 - 100 ppm. Insbesondere liegen hier die Übergangsmetallkationen Eisen, Nickel und Chrom in einem Konzentrationsbereich von 0,01 - 10 ppm vor. Anionische Verunreinigungen aus der Gruppe der Oxoanionen des Kohlenstoffs (Carbonat) und des Schwefels (Sulfat, Sulfit, Thiosulfat), sowie Halogenide (Chlorid, Bromid, lodid) weisen Konzentrationen von 1 - 1000 ppm auf.

Die hohe Reinheit des erfindungsgemäßen Produktes wird durch den Einsatz besonders reiner Rohstoffe, den Erhalt der Inertgaskette von Ein- bis Abfüllung und die Werkstoffauswahl realisiert.

### Schritt 1 - Herstellen eines hochreaktiven, freifließenden LiOH-Pulvers

Zunächst wird Lithiumhydroxidmonohydrat in Pulverform als Rohstoff in einem heizbaren Aggregat vorgelegt. Die mittlere Partikelgröße des verwendeten Lithiumhydroxidmonohydrates liegt bevorzugt in einem Bereich von 150 - 2000 µm. Bei dem temperierbaren Aggregat zur Herstellung des erfindungsgemäßen Produktes handelt es sich bevorzugt um einen Wirbelschichttrockner, einen Drehrohrofen, einen gerührten oder ungerührten Reaktor oder einen statischen Kammerofen und besonders bevorzugt um einen Wirbelschichtreaktor, da die Prozessführung im Wirbelschichtreaktor besonders wenig Einfluss auf die Partikelmorphologie nimmt und unter sehr milden Bedingungen mit hohen Umsatzraten betrieben werden kann. Des Weiteren ist ein solches Reaktorkonzept sehr leicht skalierbar.

Die Wahl der Reaktorwerkstoffe beeinflusst direkt die Reinheit des erzeugten Produktes, daher handelt es sich bevorzugt um klassische Reaktormaterialien wie beispielsweise Aluminiumoxid, Zirkonoxid, Quarzglas, Edelstahl oder andere metallische Werkstoffe, die unter den hier beschriebenen Reaktionsbedingungen keiner Auslaugung von Kationen durch Rohstoffe oder Produkte unterworfen sind.

Die Reinheit des eingesetzten Lithiumhydroxidmonohydrates entspricht bevorzugt einer Batteriequalität, d.h. typische anionische Verunreinigungen wie Carbonat oder Sulfat sollten kleiner als 1000 ppm sein und kationische Verunreinigungen, wie beispielsweise Eisen, Chrom und Nickel sollten kleiner als 20 ppm sein. Desweiteren sind die Fließeigenschaften des Rohstoffes derart, dass ein freifließendes und klumpenfreies Lithiumhydroxidmonohydrat verwendet wird.

Im Sinne der hier vorliegenden Erfindung bedeutet freifließend, dass bei einer Beladung von ca 3,5 g eines Feststoffes in einen Metalltrichter mit einem Trichterkörperdurchmesser von 45 mm, einem Trichterhalsdurchmesser von 5 mm, einer Trichterhalslänge von 3 mm und einem Öffnungswinkel von 55°, das Material rückstandsfrei (Restmenge maximal 0,0005 g) bei Öffnung des Auslaufs aus dem Gefäß austritt (siehe Beispiele 1-18).

Der erfindungsgemäße erste Verfahrensschritt ist die Trocknung des aufgegebenen Lithiumhydroxidmonohydrates unter genau definierten Bedingungen zum wasserfreien Lithiumhydroxid gemäß Gleichung 1, um gezielt eine gewünschte Partikelmorphologie und - größenverteilung des wasserfreien Lithiumhydroxids einzustellen.

LiOH·H₂O → LiOH + H₂O (1)

Hierzu wird das Lithiumhydroxidmonohydratpulver unter Luftausschluss erhitzt, wobei das Aggregat mit einem inerten Trägergas mit einer Flussrate von 1 bis 10000 I/h über- oder durchströmt wird. Als inertes Trägergas werden vorzugsweise Stickstoff oder Argon verwendet. Die Durchflussrate des inerten Trägergases liegt bevorzugt bei Durchflussraten im Bereich von 10-1000 l/h, vorzugsweise von 100-1000 I/h. Die Durchflussrate ist so eingestellt, dass ein Feinanteil des Rohstoffes mit Partikeln kleiner 50 µm mit dem Gasstrom ausgetragen und durch ein geeignetes Aggregat aufgefangen werden können. Das so hergestellte Lithiumhydroxid ist im Sinne der Erfindung staubfrei.

Im Sinne der hier vorliegenden Erfindung bedeutet staubfrei, dass 90 % aller Partikel eines Materials eine mittlere Partikelgröße in einem Bereich von 250 - 2000 µm liegen, gemessen als Volumenverteilungsfunktion ermittelt über Laserbeugungspartikelanalyse von Suspensionen des entsprechenden Feststoffes in einem inerten Medium.

Die Reaktionstemperatur liegt im Bereich von 20°C bis 450°C, wobei bevorzugt mit Temperaturen zwischen 200°C und 400°C gearbeitet wird. Die Heizrate mit denen die Endtemperatur des Aggregates erreicht wird liegt zwischen 1 °C/min und 100 °C/min.

Der vorhergehend beschriebene erste Verfahrensschritt gilt als abgeschlossen, wenn der Restkristallwassergehalt im Lithiumhydroxid unter 5 Gew.% fällt.

Die verwendete Temperatur und die eingestellte Heizrate beeinflussen direkt die Partikelmorphologie und damit die Eigenschaften des Lithiumhydroxids, wie im Folgenden gezeigt werden soll.

Wird das Kristallwasser aus Lithiumhydroxidmonohydrat bei niedrigen Temperaturen ausgetrieben, so findet bei Temperaturen unterhalb von 100°C keine vollständige Trocknung statt, die Rückreaktion des freiwerdenden Wassers steht hier im Gleichgewicht mit der Trocknungsreaktion; eine vollständige Trocknung erfordert hier sehr hohe Inertgasdurchflussraten und / oder lange Trocknungszeiten. Generell wird bei Temperaturen oberhalb von 100 °C das Gleichgewicht der Hin- und Rückreaktion der Trocknung auf die Seite des wasserfreien Lithiumhydroxids verschoben und Raum-Zeit-Ausbeute dieses Verfahrensschrittes somit positiver.

Überraschenderweise unterscheidet sich die Morphologie des hergestellten wasserfreien (Restkristallwassergehalt kleiner 5 Gew.%) Lithiumhydroxids sich je nach gewählten Trocknungsbedingungen jedoch signifikant. Wird bei niedrigen Temperaturen zwischen 100°C und 200°C getrocknet, ist das entstehende Lithiumhydroxid generell geringer reaktiv gegenüber der Schwefelquelle die im folgenden Verfahrensschritt zum Sulfidieren eingesetzt wird (Beispiele 1 und 5) als das bei vergleichsweise hohen Temperaturen zwischen 200 °C und 400°C getrocknete Lithiumhydroxid. Diese Eigenschaft korreliert mit der BET-Oberfläche der porösen Lithiumhydroxidpartikel, die für geringe Trocknungstemperaturen geringer ausfällt, als für Temperauren oberhalb von 200°C (Beispiele 1, 2, 5 und 6). Gestützt wird diese These außerdem durch rasterelektronenmikroskopische Aufnahmen, die für höhere Reaktionstemperaturen eine feinere und gleichmässiger verteilte Porenstruktur zeigen. Ein analoger, wenn auch weniger ausgeprägter Effekt ist bei unterschiedlichen Heizraten zu beobachten. Auf den rasterelektronenmikroskopischen Aufnahmen der langsam aufgeheizten Proben zeigen sich deutlich mehr Krater und Risse auf der Partikeloberfläche, wohingegen die schnell erhitzten Lithiumhydroxidpartikel deutlich weniger raue Oberflächenstrukturen zeigen (Beispiele 1-4 und 5-8).

Auch in der Partikelgröße zeigt sich der Effekt der veränderten Partikelmorphologie. Die Lithiumhydroxidpulver, die bei Temperaturen zwischen 100°C und 200°C getrocknet wurden, zeigen geringere mittlere Partikelgrößen, als die bei Temperaturen zwischen 200°C und 400°C getrockneten (vergleiche Beispiel 1 und 5 mit 2-4 und 6-8).

Diese Tendenz ist auch für unterschiedliche Heizraten zu beobachten. Generell läßt sich feststellen, dass mit steigender Temperatur und auch mit steigender Heizrate höhere BET-Oberflächen, größere mittlere Partikelgrößen und erhöhte Reaktivitäten realisiert werden können (Beispiele 1 und 5; sowie 2-4 und 6-8). Die Fließfähigkeit der erfindungsgemäßen Lithiumhydroxidpulver ist abhängig von der Partikelgrößenverteilung und somit sind auch zur Realisierung guter Fließeigenschaften höhere Trocknungstemperaturen von Vorteil (Beispiele 1 und 5; sowie 2-4 und 6-8). Die Staubfreiheit wird durch Gasströme realisiert, die in einem Bereich zwischen 20 l/h und 2000 I/h liegen.

Eine überraschende und interessante Beobachtung betrifft die Lithiumhydroxidpulver, die bei 450 °C entwässert wurden. Die Reaktivitäten zu Lithiumsulfid nehmen im Vergleich zu der Tendenz der anderen Proben nicht mehr deutlich zu, sondern stagnieren vielmehr. Trocknungsprozesse in der Nähe des Schmelzpunktes von Lithiumhydroxid (Tm = 450°C) wirken sich dementsprechend nicht mehr deutlicher positiv auf die Porenstruktur und damit die Reaktivität aus (Beispiele 3,4,7 und 8). Auch die mittlere Partikelgröße folgt dieser Tendenz. Die BET-Oberfläche dagegen ist nur noch nahezu halb so groß; dies ist insofern überraschend, als das es offensichtlich neben der Oberfläche noch einen weiteren wichtigen Parameter zur Bestimmung der Reaktivität gibt. Der Grund für die Abnahme der BET-Oberfläche und damit auch der Porosität ist in der Trocknungstemperatur zu suchen, die zur Erweichung des Materials und damit zum Verschluss der Poren führt.

Zur Untersuchung der Reaktivität der einzelnen Lithiumhydroxide wurde die Sulfidisierung nach stöchiometrischer H₂S-Dosierung abgebrochen. Die Proben wurden im Anschluss jedoch durch einen Überschuss an H₂S vollständig in Lithiumsulfid umgewandelt, um eine Vergleichbarkeit und Aussagekraft zu gewährleisten.

### Schritt 2 - Herstellen eines hochreaktiven, freifließenden Li₂S-Pulvers

Der zweite Verfahrensschritt in der Herstellung des erfindungsgemäßen Produktes beinhaltet eine Behandlung des in Schritt 1 erzeugten freifließenden, staubfreien und hochreaktiven Lithiumhydroxidpulvers mit einer Schwefelquelle, wie beispielsweise Schwefelwasserstoff, gasförmiger elementarer Schwefel, Kohlenstoffdisulfid, Mercaptane oder Schwefelnitride. Bevorzugt wird gasförmiges H₂S möglichst hoher Reinheit verwendet (siehe Gleichung 2). Das verwendete H₂S sollte nur Mengen < 300 ppm an gasförmige Verunreinigungen enthalten, die mit Lithiumhydroxid oder Lithiumsulfid reagieren können, dies sind zum Beispiel CO₂, CO oder COS.

2LiOH+H₂S → Li₂S + 2H₂O (2)

Da es sich bei dieser Reaktion und eine gering exotherme Säure-Base-Reaktion (ΔH°_{R}=-17kJ/mol) handelt, kann hier unter den unten erläuterten sehr milden Bedingungen gearbeitet werden, was zum Erhalt der in Schritt 1 eingestellten Morphologie und den korrespondierenden Eigenschaften führt, wie im Folgenden erläutert werden soll.

Generell sind die bevorzugten Bedingungen des zweiten Verfahrensschrittes so zu wählen, dass die in Schritt erzeugte Partikelmorphologie erhalten bleibt, da diese die gewünschten erfindungsgemäßen Eigenschaften bedingt. Dies sind Partikelgröße und Partikelgrößenverteilung für die positiven Fließeigenschaften, sowie BET-Oberfläche und Porenstruktur für die erhöhte Reaktivität (vergleiche Beispiele 1-8 (LiOH) mit Beispielen 9-16 (Li₂S)).

Zur Herstellung von hochreaktivem, staubfreiem und freifließendem Lithiumsulfid wird in den in Schritt 1 beschriebenen mit wasserfreiem Lithiumhydroxid gefüllten Reaktor ein konstanter Schwefelwasserstoffstrom eingeleitet, der entweder aus reinem H₂S oder einer Mischung aus H₂S und einem inertem Trägergas besteht. Das Mischungsverhältnis liegt zwischen 0 Vol.% Inertgas in 100 Vol.% H₂S und 99 Vol.% Inertgas und 1 Vol.% H₂S. Das inerte Trägergas ist bevorzugt Stickstoff oder Argon.

Die Reaktortemperatur zu Beginn der Einleitung des Reaktivgases liegt im Bereich von 20°C bis 450°C, wobei bevorzugt mit Temperaturen zwischen 200°C und 400°C gearbeitet wird. Die Heizrate mit denen die Endtemperatur des Aggregates erreicht wird, liegt zwischen 1 °C/min und 100 °C/min. Alternativ kann auf einen Abkühl- und Aufheizschritt zwischen Schritt 1 (Trocknung von Lithiumhydroxidmonohydrat) und Schritt 2 (Reaktion zu Lithiumsulfid) verzichtet werden. Der vorhergehend beschriebene zweite Verfahrensschritt gilt als abgeschlossen, wenn im Abgasstrom des Aggregates Reaktionswasser < 4 g/m³ mehr feststellbar ist. Die Methode der Wasserbestimmung ist frei wählbar, muss jedoch hinreichend genau sei.

Zur Untersuchung der Reaktivität der hergestellten Lithiumsulfidpulver wurde ein Verfahren zur Herstellung des sulfidischen Festelektrolyten der Zusammensetzung Li₆PS₅Br der Literatur entnommen [Solid State Ionics, 2014, 262, 183-187]. Es handelt sich um eine Reaktivvermahlung in einer Hochenergieplanetenkugelmühle mit anschließender Temperaturbehandlung zur Erhöhung der Kristallinität.

Die Reaktivität der in Schritt 2 hergestellten Lithiumsulfidproben zu literaturbekannten sulfidischen Festelektrolyten, hängt direkt mit der in der Schritt 1 realisierten Mikrostruktur der Partikel zusammen, die in dem in Schritt 2 durchgeführten Verfahrensschritt erhalten bleibt. Demnach wird die Reaktivität eines Lithiumsulfidpulvers erhöht, wenn die BET-Oberfläche und die Porenstruktur vergrößert werden. Dies ist, wie bereits in Schritt 1 erläutert, für hohe Temperaturen und, wenn auch weniger ausgeprägt, für hohe Aufheizraten der Fall (Beispiele 9, 10, 15, 16). Der Umsatz zu Festelektrolyt der erfindungsgemäßen Lithiumsulfidpulver liegt bei mindestens 90 Gew.%, wohingegen kommerziell erhältliche Lithiumsulfidpulver nur Umsätze zwischen 30 und 50 Gew.% zeigen (Beispiele 17 und 18).

Die verringerte Partikelgröße der kommerziellen Proben erbringt hier überraschenderweise weder eine höhere Oberfläche, noch eine erhöhte Reaktivität im Vergleich zu allen erfindungsgemäßen Lithiumsulfidproben. Überraschenderweise sind selbst die Proben mit den geringsten Reaktivitäten (Beispiel 10 und 15) deutlich reaktiver in der Umsetzung zu sulfidischen Festelektrolyten, als die chemisch mehr oder weniger identischen kommerziellen Vergleichsproben.

Auch die Fließeigenschaften und die Staubfreiheit lassen sich über einen Templateffekt in Schritt 1 einstellen. Partikelgrößenverteilung und Morphologie bleiben über den erfindungsgemäßen Verfahrensschritt 2 erhalten. Damit wird ein freifließendes, aber dennoch hochreaktives Lithiumsulfidpulver hergestellt. Kommerziell erhältliche Lithiumsulfidpulver sind aufgrund ihrer geringen Partikelgröße deutlich schwerer handhabbar und dosierbar. Dies wird durch die Beispiele zur Fließfähigkeit sehr deutlich, da kommerziell erhältliche, sehr feine Lithiumsulfidpulver in den oben beschriebenen Auslaufversuchen keinerlei Fließ- oder Rieselfähigkeit zeigen (Beispiele 17 und 18).

Der erfindungsgemäße Templateffekt, welcher vom entwässerten Lithiumhydroxidpulver zum Lithiumsulfidpulver übertragen wird, zeigt sich auch bei den Proben, die in der Nähe des Schmelzpunktes von LiOH getrocknet wurden.

Die bereits für LiOH aufgezeigte vergleichbare Reaktivität des Lithiumhydroxids zum Lithiumsulfid gilt in gleicher Weise auch für das Lithiumsulfid und dessen Reaktivität zu Li₆PS₅Br (Beispiele 12 und 16). Auch die überraschende Abnahme der BET-Oberfläche bei gleichbleibender Reaktivität wird hier beobachtet (Beispiele 12 und 16).

Um ein erfindungsgemäßes Lithiumsulfid mit kationische Verunreinigungen aus der Gruppe der Alkali-, Erdalkali- und Übergangsmetallkationen im Bereich von 0,01-100 ppm zu erzeugen, wird im vorliegenden Verfahren auf metallische Werkstoffe in Reaktorteilen verzichtet, welche in Kontakt zum Rohstoff, Zwischenprodukt und Produkt stehen und es werden nur Rohstoffe mit den oben erwähnten kationischen Verunreinigungsprofilen gewählt. Aufgrund ihrer elektrochemischen Aktivität beeinflussen kationische Verunreinigungen die Performance eines Folgeproduktes von Lithiumsulfid, wie beispielsweise sulfidische Festelektrolyte oder Kathodenmaterialien in negativer Art und Weise.

Anionische Verunreinigungen wirken sich negativ auf die Reaktivität des Lithiumsulfids aus und sind daher durch die erfindungsgemäßen Maßnahmen zu vermeiden. Neben der Auswahl eines LiOH·H₂O mit Verunreinigungen im genannten Bereich, werden außerdem die im Folgenden erläuterten Verfahrensbedingungen so gewählt, dass unerwünschte anionische Nebenprodukte nicht entstehen können.

Um den negativen Einfluss auf die Reaktivität von Lithiumsulfid experimentell zu belegen, wurden in den Beispielen 19 bis 21 Lithiumhydroxidmonohydratpulver gezielt mit verschiedenen Lithiumcarbonatanteilen verunreinigt. Lithiumcarbonat steht hier stellvertretend für alle anionischen Verunreinigungen, um den Effekt der Beeinflussung der Reaktivität zu verdeutlichen. Der so verunreinigte Rohstoff wurde analog zu Schritt 1 zunächst in entwässert und im Folgenden analog zu Schritt 2 zu Lithiumsulfid umgewandelt. Auch hier wurde zur Untersuchung der Reaktivität der einzelnen Lithiumhydroxide die Sulfidisierung nach stöchiometrischer H₂S-Dosierung abgebrochen. Die Proben wurden im Anschluss durch einen Überschuss an H₂S vollständig in Lithiumsulfid umgewandelt, um eine Vergleichbarkeit und Aussagekraft zu gewährleisten.

Mit steigendem (1 %, 5 % und 10 % Gewichtsprozent) Carbonatanteil in LiOH verringert sich die Umsetzung zu Li₂S signifikant. Analog gilt dies auch für die daraus erhaltenen mit Li₂CO₃ verunreinigten Lithiumsulfide, deren Umsatz zu Li₆PS₅Br proportional zum Anteil an Carbonat sinkt. (Beispiele 19-21).

Um carbonatische und sulfoxidische Verunreinigungen zu minimieren, ist besonderes Augenmerk auf eine intakte Schutzgaskette über den gesamten Prozess zu legen. Lithiumhydroxidmonohydrat und dessen entwässertes Analogon reagieren äußerst schnell mit CO₂ aus der Luft und bilden Lithiumcarbonat, welches sich in einer Reaktion mit H₂S bei den erfindungsgemäßen Temperaturen nur träge umsetzt und somit als Verunreinigung im Produkt verbleibt.

Dies wirkt sich negativ auf die Umsetzung zu Festelektrolyten wie Beispielsweise Li₆PS₅Br aus (siehe Beispiele 19-21). Sulfoxidische Verunreinigungen, wie beispielsweise Sulfat, Sulfit, Thiosulfat oder ähnliche Anionen aus Sauerstoff und Schwefel, bilden sich bei Sauerstoffeintritt in den Reaktionsraum während der Verschwefelung von LiOH oder aus der Reaktion von Li₂S mit Sauerstoff bei erhöhten Temperaturen.

Die Erfindung wird mit den in den nachfolgenden Tabellen dargestellten Beispielen und anhand bevorzugter Ausführungsformen näher erläutert.

### BEISPIELE

### Schritt 1 - Herstellen eines hochreaktiven, freifließenden LiOH-Pulvers zur Verwendung in Schritt 2

| | **Trocknungsbedingungen*** | | | | **Produktcharakteristika** | | | | | |
|---|---|---|---|---|---|---|---|---|---|---|
| **Beispiel** | Volumenstrom Inertgas [l/h] | Heizrate [°C/min] | Temperatur [°C] | Zeit [min] | Fließfähigkeit** | d₅₀ [µm] | Staubfreiheit*** | BET-Oberfläche [m²/g] | Porenstruktur**** | Umsatz zu Li₂S***** [%] |
| **Rohstoff LiOH·H₂O** | --- | --- | --- | --- | mittel | 450 | nein | 0,7 | Keine | 0 |
| **1** | 400 | 4 | 150 | 180 | mittel | 246 | Ja | 1,5 | grob; unregelmäßig | 50 |
| **2** | 400 | 4 | 250 | 180 | hoch | 310 | Ja | 9,2 | grob&fein; regelmäßig | 60 |
| **3** | 400 | 4 | 350 | 180 | hoch | 359 | Ja | 7,3 | grob & fein; regelmäßig | 90 |
| **4** | 400 | 4 | 450 | 180 | hoch | 359 | Ja | 4,8 | grob; regelmäßig | 92 |
| **5** | 400 | 60 | 150 | 180 | mittel | 265 | Ja | 5,1 | grob&fein, unregelmäßig | 50 |
| **6** | 400 | 60 | 250 | 180 | hoch | 319 | Ja | 7,1 | grob & fein; regelmäßig | 70 |
| **7** | 400 | 60 | 350 | 180 | hoch | 327 | Ja | 7,6 | grob & fein; regelmäßig | 90 |
| **8** | 400 | 60 | 450 | 180 | hoch | 321 | Ja | 3,8 | grob & fein; regelmäßig | 90 |

| | | | | | | | | | | |
|---|---|---|---|---|---|---|---|---|---|---|
| **Trocknung in Quarzglasreaktor mit 4 cm Durchmesser und 0, 1 kg Einwaage LiOH·H₂O* **Feststoffrückstand im Trichter < 0.0005 g* ****keine Partikel < 150 µm* *****abgeleitet aus rasterelektronenmikroskopischen Aufnahmen* ******Umsatz ermittelt über Röntgenpulverdiffraktometrie der Proben nach stöchiometrischer* H₂S-Dosierung | | | | | | | | | | |

### Schritt 2 - Herstellen eines hochreaktiven, freifließenden Li₂S-Pulvers aus Produkten aus Schritt 1

| | **Reaktionsbedingungen*** | | | | | **Produktcharakteristika** | | | | | |
|---|---|---|---|---|---|---|---|---|---|---|---|
| Beispiel | Volumenstrom Inertgas N2 [l/h] | Volumenstrom Reaktivgas H2S [l/h] | Heizrate [°C/min] | Temperatur [°C] | Zeit [min] | Fließfähigkeit** | D50 [µm] | Staubfreiheit*** | **BET-**Oberfläche [m2/g] | Porenstruktur**** | Umsatz zu Li₆PS₅Br***** |
| **09** | 300 | 100 | 4 | 150 | 60 | hoch | 267 | Ja | 4,4 | grob; unregelmäßig | 0 |
| **10** | 300 | 100 | 4 | 250 | 60 | hoch | 375 | Ja | 8,6 | grob&fein; regelmäßig | 93 |
| **11** | 300 | 100 | 4 | 350 | 60 | hoch | 341 | Ja | 14,3 | grob & fein; regelmäßig | n.b. |
| **12** | 300 | 100 | 4 | 450 | 60 | hoch | 438 | Ja | 7,4 | grob; regelmäßig | n.b. |
| **13** | 300 | 100 | 60 | 150 | 60 | hoch | 367 | Ja | 5,4 | grob&fein, unregelmäßig | n.b. |
| **14** | 300 | 100 | 60 | 250 | 60 | hoch | 392 | Ja | 15,01 | grob & fein; regelmäßig | n.b. |
| **15** | 300 | 100 | 60 | 350 | 60 | hoch | 311 | Ja | 14,6 | grob & fein; regelmäßig | 94 |
| **16** | 300 | 100 | 60 | 450 | 60 | hoch | 361 | Ja | 6,6 | grob & fein; regelmäßig | 100 |
| **17** | Kommerzielles Li₂S | | | | | keine | 15 | Nein | 3,6 | keine | 48 |
| **18** | Kommerzielles Li₂S | | | | | keine | <75 | Nein | 3,7 | keine | 37 |

| | | | | | | | | | | | |
|---|---|---|---|---|---|---|---|---|---|---|---|
| **Reaktion in Quarzglasreaktor mit 4 cm Durchmesser und 0, 1 kg Einwaage LiOH·H₂O* ***Feststoffrückstand im Trichter < 0.0005 g* ****keine Partikel < 150 µm* *****abgeleitet aus rasterelektronenmikroskopischen Aufnahmen* ******Umsatz ermittelt über Röntgenpulverdiffraktometrie der Proben nach literaturbekannter Syntheseroute* | | | | | | | | | | | |

### Einfluss von Verunreinigungen auf die Reaktivität

| | **Reaktionsbedingungen Trocknung*** | | | | | **Reaktivität** | **Reaktionsbedingungen Sulfidisierung*** | | | | | **Reaktivität** |
|---|---|---|---|---|---|---|---|---|---|---|---|---|
| Beispiel | **wᵢ (Li₂CO₃) [Gew%]** | Heizrate [°C/min] | Temperatur [°C] | Zeit [min] | Volumenstrom Inertgas [l/h] | Umsatz von LiOH zu Li₂S** [%] | Volumenstrom Inertgas N2 [I/h] | Volumenstrom Reaktivgas H2S [l/h] | Heizrate [°C/min] | Temperatur [°C] | Zeit [min] | Umsatz von Li₂S zu Li₆PS₅Br*** [%] |
| **19** | **1** | 60 | 350 | 180 | 400 | 51 | 300 | 100 | 60 | 350 | 60 | 97 |
| **20** | **5** | 60 | 350 | 180 | 400 | 50 | 300 | 100 | 60 | 350 | 60 | 82 |
| **21** | **10** | 60 | 350 | 180 | 400 | 44 | 300 | 100 | 60 | 350 | 60 | 80 |

| | | | | | | | | | | | | |
|---|---|---|---|---|---|---|---|---|---|---|---|---|
| **Reaktion in Quarzglasreaktor mit 4cm Durchmesser, 0,1 kg Einwaage LiOH·H₂O, Trocknungsbedingungen wie Beispiel 7, Reaktionsbedingungen wie Beispiel 15* ***Umsatz ermittelt über Röntgenpulverdiffraktometrie der Proben nach stöchiometrischer* H₂S-Dosierung ****Umsatz ermittelt über Röntgenpulverdiffraktometrie der Proben nach literaturbekannter Syntheseroute* | | | | | | | | | | | | |

Bevorzugte Ausführungsformen der Erfindung sind:
Ausführungsform (1): Lithiumsulfidpulver, dadurch gekennzeichnet, dass es eine mittlere Partikelgröße zwischen 250 und 1500 µm und BET-Oberflächen zwischen 1 und 100 m²/g aufweist.
Ausführungsform (2): Lithiumsulfidpulver nach Ausführungsform (1), dadurch gekennzeichnet, dass es bei einer Umsetzung zu sulfidischen Festelektrolyten der Umsatz mindestens 90 Gew.% beträgt.
Ausführungsform (3): Lithiumsulfidpulver nach Ausführungsform (1), dadurch gekennzeichnet, dass kationische Verunreinigungen aus der Gruppe der Alkali-, Erdalkali- und Übergangsmetallkationen im Bereich von 0,01 - 100 ppm und anionische Verunreinigungen aus der Gruppe der Oxoanionen des Kohlenstoffs und des Schwefels sowie Halogenide Konzentrationen von 1 - 1000 ppm enthalten sind.
Ausführungsform (4): Lithiumsulfidpulver nach Ausführungsform (3), dadurch gekennzeichnet, dass Übergangsmetallkationen von Eisen, Nickel und/oder Chrom in einem Konzentrationsbereich von 0,01 - 10 ppm sowie Carbonat-, Sulfat-, Sulfit-, Thiosulfat-, Chlorid-, Bromid- und/oder lodid-Anionen in einem Konzentrationsbereich von 1 - 1000 ppm enthalten sind.
Ausführungsform (5): Lithiumsulfidpulver nach einer der Ausführungsformen (1) bis (4), dadurch gekennzeichnet, dass es freifließend ist, wobei bei einer Beladung eines Metalltrichters mit einem Trichterkörperdurchmesser von 45 mm, einem Trichterhalsdurchmesser von 5 mm, einer Trichterhalslänge von 3 mm und einem Öffnungswinkel von 55° mit 3.5 g des Lithiumsulfidpulvers, das Lithiumsulfidpulver bis auf eine Restmenge von maximal 0.0005 g bei Öffnung des Auslaufs aus dem Metalltrichter austritt.
Ausführungsform (6): Verfahren zur Herstellung eines Lithiumsulfidpulvers gemäß einer der Ausführungsformen (1) bis (5), dadurch gekennzeichnet, dass in einer ersten Stufe Lithiumhydroxidmonohydrat mit einer mittleren Partikelgröße im Bereich von 150 - 2000 µm in einem temperierbaren Aggregat auf eine Reaktionstemperatur zwischen 150°C und 450°C unter Luftausschluss erhitzt und mit einem Inertgas über- oder durchströmt wird bis der Restkristallwassergehalt des gebildeten Lithiumhydroxids kleiner 5 Gew.% beträgt und in einer zweiten Stufe das in der ersten Stufe gebildete wasserfreie Lithiumhydroxid mit einer Schwefelquelle aus der Gruppe Schwefelwasserstoff, elementarer Schwefel, Kohlenstoffdisulfid, Mercaptane oder Schwefelnitride gemischt, über- oder durchströmt wird.
Ausführungsform (7): Verfahren nach Ausführungsform (6), dadurch gekennzeichnet, dass die Reaktionstemperatur in Stufe 1 zwischen 200°C und 400°C liegt.
Ausführungsform (8): Verfahren nach Ausführungsform (7), dadurch gekennzeichnet, dass die Reaktionstemperatur in Stufe 1 zwischen 300°C und 400°C liegt.
Ausführungsform (9): Verfahren nach einer der Ausführungsformen (6) bis (8), dadurch gekennzeichnet, dass in der Stufe 2 in den mit dem in Stufe 1 gebildeten Lithiumhydroxid befüllten Reaktor ein konstanter Schwefelwasserstoffstrom eingeleitet wird, der aus reinem H₂S oder einer Mischung aus H₂S und einem inertem Trägergas besteht, wobei das Mischungsverhältnis zwischen 0 Vol.% Inertgas in 100 Vol.% H₂S und 99 Vol.% Inertgas und 1 Vol.% H₂S liegt.
Ausführungsform (10): Verfahren nach Ausführungsform (9), dadurch gekennzeichnet, dass das Trägergas mit Flussraten von 1 bis 10000l/h in dem Reaktionsaggregat das Lithiumhydroxid über- oder durchströmt.
Ausführungsform (11): Verfahren nach Ausführungsform (10), dadurch gekennzeichnet, dass die Flussrate 10-1000 l/h, vorzugsweise 100-1000 I/h beträgt.
Ausführungsform (12): Verfahren nach einer der Ausführungsformen (9) bis (11), dadurch gekennzeichnet, dass als Trägergas Argon oder Stickstoff verwendet wird.
Ausführungsform (13): Verfahren nach Ausführungsform (6), dadurch gekennzeichnet, dass eine Aufheizrate zum Erreichen der Reaktionstemperatur von 1-1000°C/min, vorzugsweise von 1-100°C/min angewendet wird.
Ausführungsform (14): Verfahren nach Ausführungsform (6), dadurch gekennzeichnet, dass die Reaktionstemperatur der Stufe 2 zwischen 20°C und 450°C, bevorzugt zwischen 200°C und 400°C, besonders bevorzugt zwischen 300°C und 350°C liegt.
Ausführungsform (15): Lithiumhydroxid erhalten gemäß dem Verfahren nach Ausführungsform (6), dadurch gekennzeichnet, dass die in Stufe 1 gebildeten Partikel eine mittlere Partikelgröße zwischen 250 und 1500 µm und BET-Oberflächen zwischen 1 und 100 m²/g aufweisen.

## Patentansprüche

1. Lithiumsulfidpulver, **dadurch gekennzeichnet, dass** es eine mittlere Partikelgröße zwischen 250 und 1500 µm und BET-Oberflächen zwischen 1 und 100 m²/g aufweist und kationische Verunreinigungen aus der Gruppe der Alkali-, Erdalkali- und Übergangsmetallkationen im Bereich von 0,01 bis 100 ppm und anionische Verunreinigungen aus der Gruppe der Oxoanionen des Kohlenstoffs und des Schwefels sowie Halogenide in Konzentrationen von 1 bis 1000 ppm enthält.

2. Lithiumsulfidpulver nach Anspruch 1, **dadurch gekennzeichnet, dass** Übergangsmetallkationen von Eisen, Nickel und/oder Chrom in einem Konzentrationsbereich von 0,01 bis 10 ppm sowie Carbonat-, Sulfat-, Sulfit-, Thiosulfat-, Chlorid-, Bromid- und/oder lodid-Anionen in einem Konzentrationsbereich von 1 bis 1000 ppm enthalten sind.

3. Lithiumsulfidpulver nach einem der Ansprüche 1 bis 2, **dadurch gekennzeichnet, dass** es freifließend ist, wobei bei einer Beladung eines Metalltrichters mit einem Trichterkörperdurchmesser von 45 mm, einem Trichterhalsdurchmesser von 5 mm, einer Trichterhalslänge von 3 mm und einem Öffnungswinkel von 55° mit 3.5 g des Lithiumsulfidpulvers, das Lithiumsulfidpulver bis auf eine Restmenge von maximal 0.0005 g bei Öffnung des Auslaufs aus dem Metalltrichter austritt.

4. Verfahren zur Herstellung eines Lithiumsulfidpulvers gemäß einem der Ansprüche 1 bis 3, **dadurch gekennzeichnet, dass** in einer **ersten Stufe** Lithiumhydroxidmonohydrat mit einer mittleren Partikelgröße im Bereich von 150 bis 2000 µm in einem temperierbaren Aggregat auf eine Reaktionstemperatur zwischen 150°C und 450°C unter Luftausschluss erhitzt und mit einem Inertgas über- oder durchströmt wird, bis der Restkristallwassergehalt des gebildeten Lithiumhydroxids kleiner als 5 Gew.% ist, wobei die Aufheizrate zum Erreichen der Reaktionstemperatur von 1°C/min bis 1000°C/min beträgt und wobei das Inertgas eine Flussrate von 10 bis 1000 I/h hat, und in einer **zweiten Stufe** das in der ersten Stufe gebildete wasserfreie Lithiumhydroxid mit einer Schwefelquelle aus der Gruppe Schwefelwasserstoff, elementarer Schwefel, Kohlenstoffdisulfid, Mercaptane oder Schwefelnitride gemischt, über- oder durchströmt wird, wobei dann, wenn die Schwefelquelle Schwefelwasserstoff ist, der Schwefelwasserstoff als Mischung von H₂S und einem inerten Trägergas eingeleitet wird.

5. Verfahren nach Anspruch 4, **dadurch gekennzeichnet, dass** das Lithiumsulfidpulver zu sulfidischen Festelektrolyten verarbeitet wird, wobei mindestens 90 Gew.% des Lithiumsulfidpulvers zu sulfidischen Festelektrolyten umgesetzt werden.

6. Verfahren nach Anspruch 4, **dadurch gekennzeichnet, dass** die Reaktionstemperatur in Stufe 1 zwischen 200°C und 400°C liegt.

7. Verfahren nach Anspruch 6, **dadurch gekennzeichnet, dass** die Reaktionstemperatur in Stufe 1 zwischen 300°C und 400°C liegt.

8. Verfahren nach einem der Ansprüche 4 bis 7, **dadurch gekennzeichnet, dass** in der Stufe 2 in den mit dem in Stufe 1 gebildeten Lithiumhydroxid befüllten Reaktor ein konstanter Schwefelwasserstoffstrom eingeleitet wird, der aus einer Mischung aus H₂S und einem inertem Trägergas besteht, wobei das Mischungsverhältnis zwischen 0 Vol.% Inertgas in 100 Vol.% H₂S und 99 Vol.% Inertgas und 1 Vol.% H₂S liegt.

9. Verfahren nach Anspruch 4, **dadurch gekennzeichnet, dass** die Flussrate von 100 bis 1000 I/h beträgt.

10. Verfahren nach einem der Ansprüche 4 bis 9, **dadurch gekennzeichnet, dass** als Trägergas Argon oder Stickstoff verwendet wird.

11. Verfahren nach Anspruch 4, **dadurch gekennzeichnet, dass** die Reaktionstemperatur der Stufe 2 zwischen 20°C und 450°C liegt.

12. Verfahren nach Anspruch 4, **dadurch gekennzeichnet, dass** eine Aufheizrate zum Erreichen der Reaktionstemperatur von 1 °C/min bis 100 °C/min angewendet wird.

13. Verfahren nach Anspruch 4, **dadurch gekennzeichnet, dass** die Reaktionstemperatur der Stufe 2 zwischen 200°C und 400°C liegt.

14. Lithiumhydroxid erhalten gemäß dem Verfahren nach Anspruch 4, **dadurch gekennzeichnet, dass** die in Stufe 1 gebildeten Partikel eine mittlere Partikelgröße zwischen 250 und 1500 µm und BET-Oberflächen zwischen 1 und 100 m²/g aufweisen.
